# EUROPEAN PATENT APPLICATION

(11) **EP 4 391 257 A1**
(43) Date of publication of application: **26.06.2024**
(21) Application number: 23217641.2
(22) Date of filing: 18.12.2023
(51) Int. Cl.: H02B 1/56, H01H 9/52, H02B 11/04

(54) **A CIRCUIT BREAKER AND A TULIP CONTACT FOR THERMAL MANAGEMENT IN AN ELECTRICAL EQUIPMENT**

(30) Priority: 21.12.2022 IN 202241074295
(71) Applicant: ABB Schweiz AG, 5400 Baden (CH)
(72) Inventor: KULKARNI, Bhushan, 422005 Nashik (IN); PARDESHI, Sagar, 422006 Nashik (IN); JAKATE, Vikas, 422013 Nashik (IN)
(74) Representative: Zimmermann & Partner Patentanwälte mbB

(57) **Abstract**

The present disclosure relates to a circuit breaker (100) for thermal management in an electrical equipment. The circuit breaker (100) comprises a tulip contact (101) positioned on a moving contact assembly (106). The circuit breaker (100) comprises a tubular base portion (102), a plurality of contact fingers (103), and a heat sink (105) integrated within the tubular base portion (102). The plurality of contact fingers (103) is circumferentially disposed on an outer surface of a ring nut (104) of the tulip contact (101). The heat sink (105) is integrated to the ring nut (104) of the tulip contact (101), for thermal management in an electrical equipment.

## Description

### TECHNICAL FIELD

The present disclosure generally relates to circuit breakers. More particularly, the present disclosure relates to a circuit breaker and a tulip contact for thermal management in an electrical equipment.

### BACKGROUND

A circuit breaker is used to protect electrical equipments from damage caused by overcurrent, leakage current, short circuits, and the like. The circuit breaker disrupts a flow of a current when current in an electrical equipment exceeds a certain threshold. The current is disrupted by opening of contacts in the circuit breaker. When the contacts of the circuit breaker open, medium between the contacts is ionized and an arc is formed. Heat is generated in the circuit breaker due to various reasons. For instance, the heat is generated due to formation of the arc. The heat may also be generated due to generation of high currents, faults in the circuit breaker, and the like.

Generally, heat sinks are used in the circuit breaker to dissipate the heat in conventional circuit breakers. Heatsinks are normally placed in different locations in the circuit breaker determined by performing temperature rise tests. These locations include a side of a pole of the circuit breaker that does not include contacts of the circuit breaker, a bottom side of a contact assembly, a top side of the contact assembly connecting to other compartments in the circuit breaker, and the like. However, these locations do not provide proper air passage for dissipation of the heat in the circuit breaker.

The information disclosed in this background of the disclosure section is only for enhancement of understanding of the general background of the invention and should not be taken as an acknowledgement or any form of suggestion that this information forms the prior art already known to a person skilled in the art.

### SUMMARY

In an embodiment, the present disclosure provides a circuit breaker for thermal management in an electrical equipment. The circuit breaker comprises a tulip contact positioned on a moving contact assembly. The tulip contact comprises a tubular base portion, a plurality of contact fingers, and a heat sink integrated within the tubular base portion. The plurality of contact fingers is circumferentially disposed on an outer surface of a ring nut of the tulip contact. The heat sink is integrated to the ring nut of the tulip contact, for thermal management in an electrical equipment.

In an embodiment, the present disclosure provides a tulip contact for thermal management in an electrical equipment. The tulip contact comprises a tubular base portion, a plurality of contact fingers, and a heat sink integrated within the tubular base portion. The plurality of contact fingers is circumferentially disposed on an outer surface of a ring nut of the tulip contact. The heat sink is integrated to the ring nut of the tulip contact, for thermal management in an electrical equipment.

The foregoing summary is illustrative only and is not intended to be in any way limiting. In addition to the illustrative aspects, embodiments, and features described above, further aspects, embodiments, and features will become apparent by reference to the drawings and the following detailed description.

### BRIEF DESCRIPTION OF THE ACCOMPANYING DRAWINGS

The novel features and characteristics of the disclosure are set forth in the appended claims. The disclosure itself, however, as well as a preferred mode of use, further objectives and advantages thereof, will best be understood by reference to the following detailed description of an illustrative embodiment when read in conjunction with the accompanying figures. One or more embodiments are now described, by way of example only, with reference to the accompanying figures wherein like reference numerals represent like elements and in which:
**Figure 1** shows a circuit breaker for thermal management in an electrical equipment, in accordance with embodiments of the present disclosure;
**Figures 2A** **and** **2B** show exemplary illustrations of coupling of a heat sink to a ring nut of a tulip contact, in accordance with embodiments of the present disclosure;
**Figures 3A-3C** show exemplary illustrations of removably coupling of a heat sink to a ring nut of a tulip contact, in accordance with embodiments of the present disclosure;
**Figures 4A** **and** **4B** show exemplary illustrations of integration of a heat sink with a closed tubular base portion of a circuit breaker, in accordance with some embodiments of the present disclosure;
**Figures 5A** **and** **5B** show exemplary illustrations of integration of a heat sink with a ventilated tubular base portion of a circuit breaker, in accordance with some embodiments of the present disclosure;
**Figure 6** shows an exemplary structure of a heat sink, in accordance with some embodiments of the present disclosure; and
**Figure 7** shows an exemplary switchgear with integrated heat sink, in accordance with some embodiments of the present disclosure.

It should be appreciated by those skilled in the art that any block diagram herein represents conceptual views of illustrative systems embodying the principles of the present subject matter. Similarly, it will be appreciated that any flow charts, flow diagrams, state transition diagrams, pseudo code, and the like represent various processes which may be substantially represented in computer readable medium and executed by a computer or processor, whether or not such computer or processor is explicitly shown.

### DETAILED DESCRIPTION

In the present document, the word "exemplary" is used herein to mean "serving as an example, instance, or illustration." Any embodiment or implementation of the present subject matter described herein as "exemplary" is not necessarily to be construed as preferred or advantageous over other embodiments.

While the disclosure is susceptible to various modifications and alternative forms, specific embodiment thereof has been shown by way of example in the drawings and will be described in detail below. It should be understood, however that it is not intended to limit the disclosure to the particular forms disclosed, but on the contrary, the disclosure is to cover all modifications, equivalents, and alternatives falling within the scope of the disclosure.

The terms "comprises", "comprising", or any other variations thereof, are intended to cover a non-exclusive inclusion, such that a setup, device or method that comprises a list of components or steps does not include only those components or steps but may include other components or steps not expressly listed or inherent to such setup or device or method. In other words, one or more elements in a system or apparatus proceeded by "comprises... a" does not, without more constraints, preclude the existence of other elements or additional elements in the system or apparatus.

Circuit breakers protect electrical equipments from damage caused by overcurrent, leakage current, short circuits, and the like. Heat is generated in the circuit breaker due to various reasons. For instance, the heat is generated due to formation of arc due to electrical resistance, generation of high currents, faults in the circuit breaker, and the like. Generally, heat sinks are placed in different locations in the circuit breaker to dissipate the heat.

Embodiments of the present disclosure relate to a circuit breaker for thermal management in an electrical equipment. In the present disclosure, a heat sink is integrated with a tulip contact. The heat sink is integrated within a tubular base portion of the tulip contact, for thermal management in the electrical equipment. The main reason for generation of the heat is due to formation of the arc in the circuit breaker. The arc generated in the circuit breaker originates at contacts of the circuit breaker. Hence, the contacts of the circuit breaker are source for generation of the heat. The present disclosure provides the heat sink integration within the tubular base portion of the tulip contact, such that the heat is dissipated at source i.e., the contacts of the circuit breaker. Hence, temperature is lowered, thus leading to efficient thermal management of the circuit breaker. This increases thermal stability of the circuit breaker.

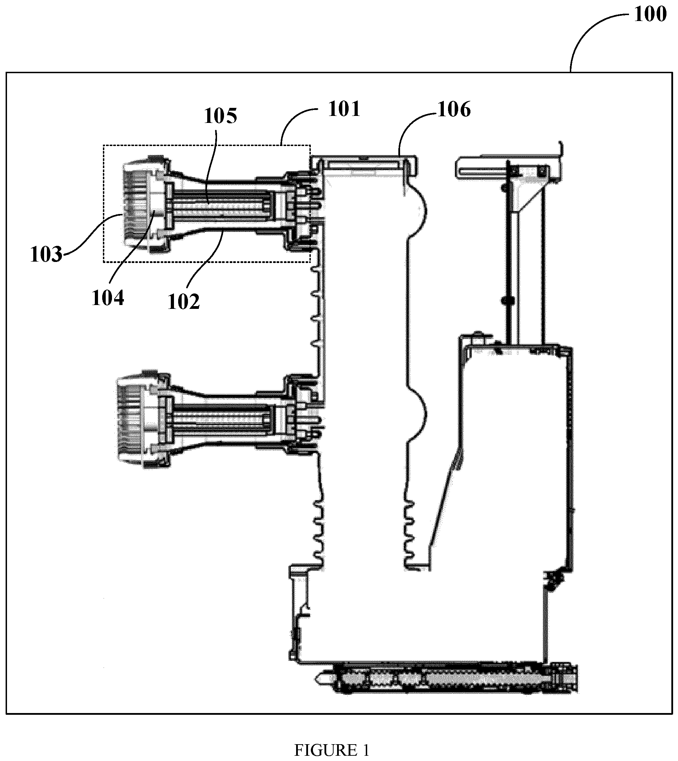

**Figure 1** shows a circuit breaker 100 for thermal management in an electrical equipment, in accordance with embodiments of the present disclosure. The circuit breaker 100 is an electrical safety device to protect the electrical equipment from damage caused by an overcurrent, short circuit, and the like. In an embodiment, the circuit breaker 100 may be a withdrawable circuit breaker. For example, the circuit breaker 100 may be a vacuum circuit breaker, an air circuit breaker, a gas circuit breaker, and the like. The circuit breaker 100 comprises a fixed contact assembly, a moving contact assembly, an arc chamber, and the like. The movement of moving contact assembly away from the fixed contact assembly causes disruption of current, to safeguard the electrical equipment. The electrical equipment may include an apparatus, a device, a component, an appliance, and the like used for generation, conversion, transmission, distribution, or utilization of electric energy. For example, the electrical equipment may comprise electric machines, transformers, measuring instruments, protective devices, wiring systems, and the like.

Figure 1 illustrates the circuit breaker 100 comprising a moving contact assembly 106 for explanation purposes only. The circuit breaker 100 may also comprise other components like the fixed contact assembly, an arc chamber, and the like, and thus Figure 1 should not be considered as limiting. As shown, the circuit breaker 100 comprises a tulip contact 101 positioned on the moving contact assembly 106. The tulip contact 101 comprises a tubular base portion 102 (also referred as a contact arm) extending in a direction perpendicular to a pole of the moving contact assembly 106. In an embodiment, the tubular base portion 102 may be one of, a closed tubular base portion or a tubular base portion with a plurality of slits. Further, the tulip contact 101 comprises a plurality of contact fingers 103 circumferentially disposed in a tulip shape on a ring nut 104 of the tulip contact 101. The ring nut 104 is a supporting structure for disposing the plurality of contact fingers 103. The plurality of contact fingers 103 are disposed on an outer surface of the ring nut 104. The plurality of contact fingers 103 comprise inner contact fingers and outer contact fingers (not illustrated through Figures). The plurality of contact fingers 103 extend from the tubular base portion 102 towards a fixed contact positioned on the fixed contact assembly (not illustrated through Figures). The movement of the plurality of contact fingers 103 towards the fixed contact leads to engagement of the tulip contact 101 and the fixed contact and establishes an electrical connection between the tulip contact 101 and the fixed contact. This allows a flow of current in the electrical equipment. The movement of the plurality of contact fingers 103 away from the fixed contact leads to separation of the tulip contact 101 and the fixed contact and causes electrical disconnection between the tulip contact 101 and the fixed contact. This disrupts the flow of current in the electrical equipment. Further, the tulip contact 101 comprises a heat sink 105. The heat sink 105 is a heat exchanger that transfers the heat generated in the circuit breaker 100 to surroundings, thereby allowing regulation of temperature in the circuit breaker 100. In the present disclosure, the heat sink 105 is integrated within the tubular base portion 102 of the tulip contact 101, as contacts of the circuit breaker 100 including the tulip contact 101 is a main source of generation of the heat. The heat sink 105 is integrated to the ring nut 104 of the tulip contact 101.

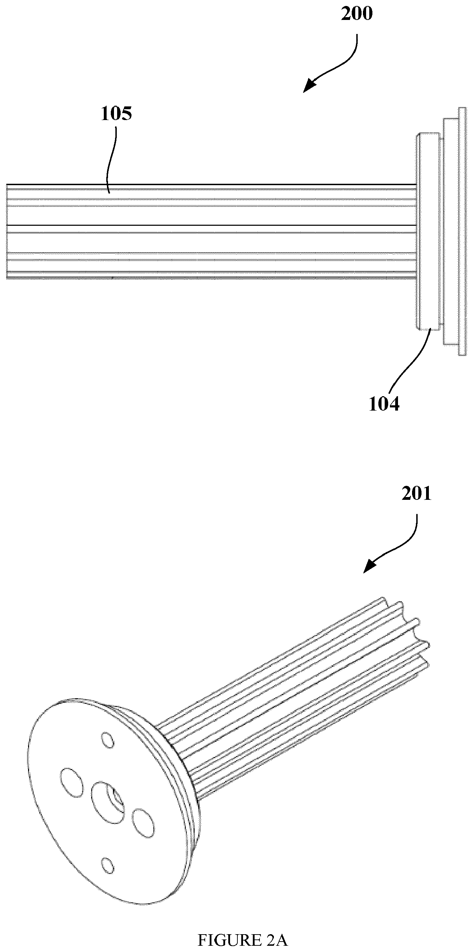

In an embodiment, the heat sink 105 may be integrated to the ring nut 104 by coupling the heat sink 105 to the ring nut 104 of the tulip contact 101. The coupling may comprise thermal coupling of the heat sink 105 to the ring nut 104. The thermal coupling is a process in which two or more parts are joined or coalesced at contacting surfaces by application of heat. The thermal coupling produces permanent joint between the parts. **Figure 2A** illustrates a side view 200 of the heat sink 105 thermally coupled with the ring nut 104. Further, **Figure 2A** illustrates a perspective view 201 of the heat sink 105 thermally coupled with the ring nut 104. In an embodiment, the heat sink 105 and the ring nut 104 may be manufactured separately and integrated using the thermal coupling. In another embodiment, the heat sink 105 integrated with the ring nut 104 may be manufactured as a single part by thermally coupling the heat sink 105 to the ring nut 104.

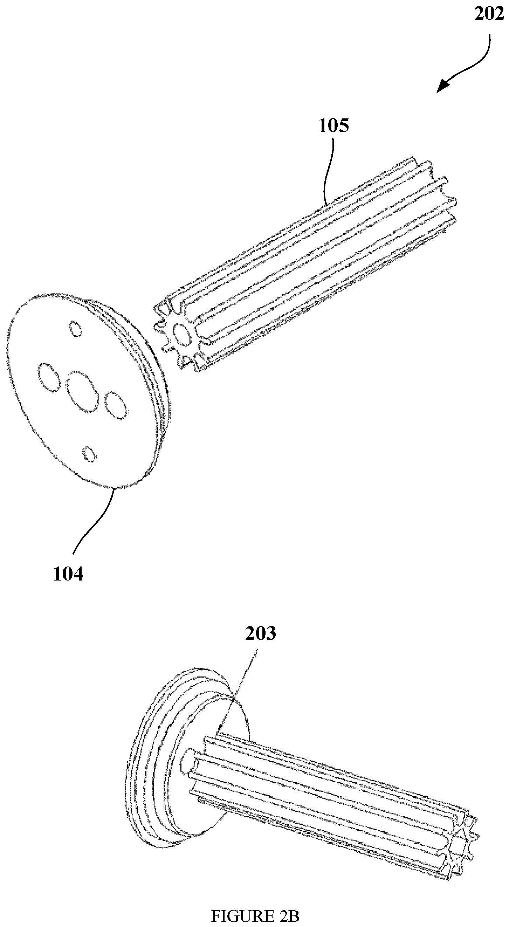

In an embodiment, the thermal coupling of the heat sink 105 to the ring nut 104 may include coupling of the heat sink 105 to the ring nut 104 by the brazing process. Brazing is a metal-joining process in which two or more parts are joined together by melting and flowing a filler metal into a join. **Figure 2B** illustrates an exploded view 202 of the heat sink 105 and the ring nut 104. Further, **Figure 2B** illustrates a connection 203 of the heat sink 105 with the ring nut 104 by the process of brazing. A person skilled in the art will appreciate that the heat sink 105 may be thermally coupled with the ring nut 104 through other processes such as welding, soldering, and the like.

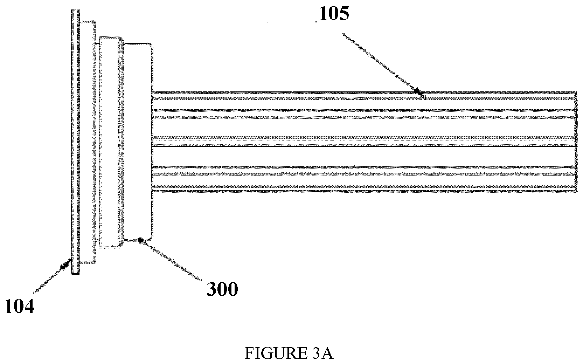

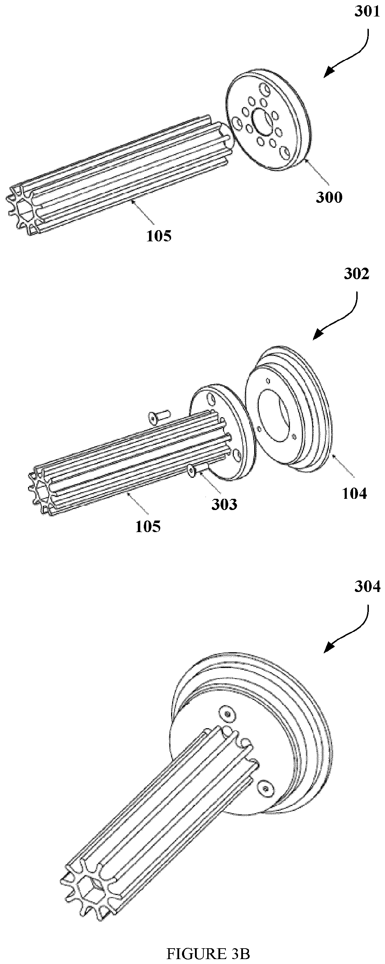

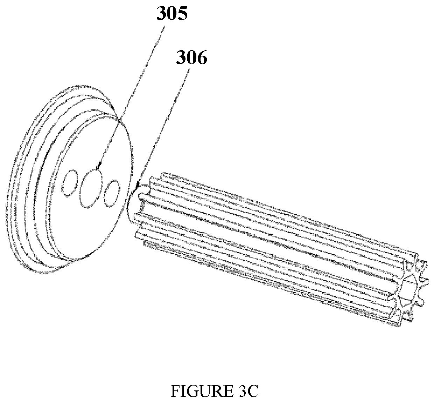

In an embodiment, the heat sink 105 may be integrated to the ring nut 104 by removably coupling the heat sink 105 to the ring nut 104 of the tulip contact 101. The removably coupling may comprise mechanical coupling of the heat sink 105 to the ring nut 104. The mechanical coupling is a process for joining parts through mechanical methods. In an embodiment, the heat sink 105 may be mechanically coupled to the ring nut 104 as shown in **Figure 3A****.** Firstly, as shown, the ring nut 104 may be attached to a base 300. The base 300 may be a coupling structure used for integrating the heat sink 105 to the ring nut 104. The base 300 may be attached to the ring nut 104 using known mechanical or thermal joining processes. Then, the heat sink 105 may be mechanically coupled to the ring nut 104 via the base 300. **Figure 3B** illustrates an exploded view 301 of the heat sink 105 and the base 300. In an embodiment, the base 300 may comprise slots for coupling the heat sink 105 on the base 300 by fastening screws 303 as shown in an exploded view 302. Further, **Figure 3B** illustrates a perspective view 304 of the heat sink 105 removably coupled to the base 300 attached to the ring nut 104 by the process of fastening. In another embodiment, the heat sink 105 may be mechanically coupled with the ring nut 104 directly. For example, the heat sink 105 may be mechanically coupled with the ring nut 104 using the process of threading. **Figure 3C** illustrates an exploded view of the heat sink 105 and the ring nut 104. As shown, inner threading 305 may be provided on the ring nut 104. In an example, spiral grooves of equal measurement may be etched internally in the ring nut 104. Similarly, outer threading 306 may be provided on the heat sink 105. The heat sink 105 with the outer threading 306 may be fitted into the ring nut 104 with the inner threading 305. A person skilled in the art will appreciate that the heat sink 105 may be mechanically coupled with the ring nut 104 through other processes such as, riveting, clamping, and the like.

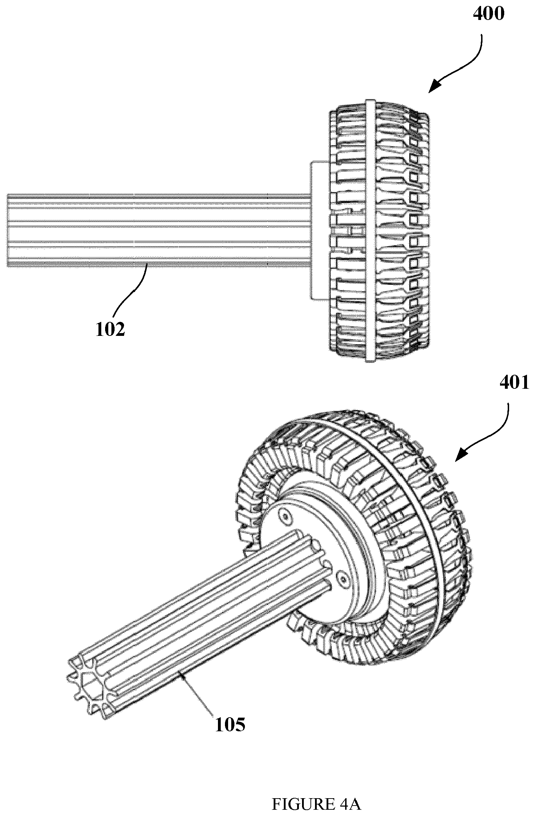

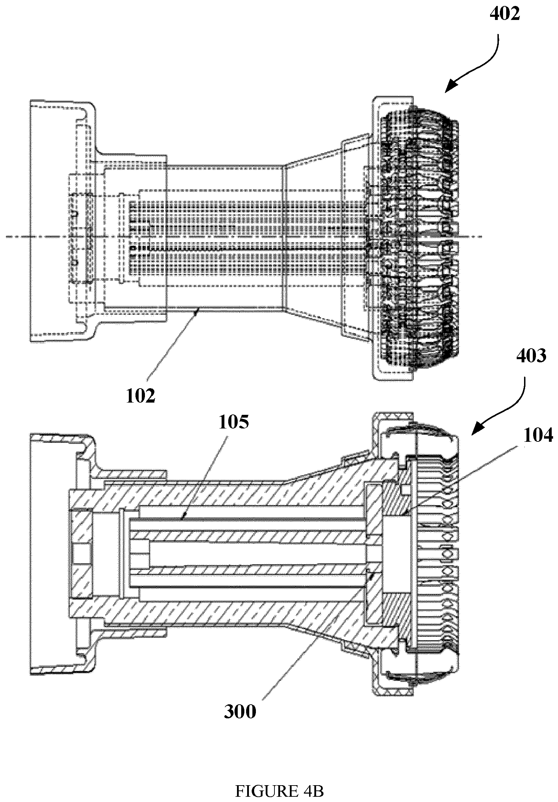

In an embodiment, the tubular base portion 102 in the circuit breaker 100 may be a closed tubular base portion. In an embodiment, the circuit breaker 100 may comprise the closed tubular base portion for providing di-electric capability. **Figure 4A** illustrates the circuit breaker 400 with the closed tubular base portion . The heat sink 105 is integrated inside the closed tubular base portion as shown in perspective view 401 in Figure 4A. **Figure 4B** illustrates a sectional side view 402 of circuit breaker 400 with the closed tubular base portion. Further, Figure 4B illustrates a sectional perspective view 403 of the heat sink 105 integrated inside the closed tubular base portion. The integration of the heat sink 105 within the closed tubular base portion improves thermal functionality without affecting di-electric performance of the circuit breaker 400.

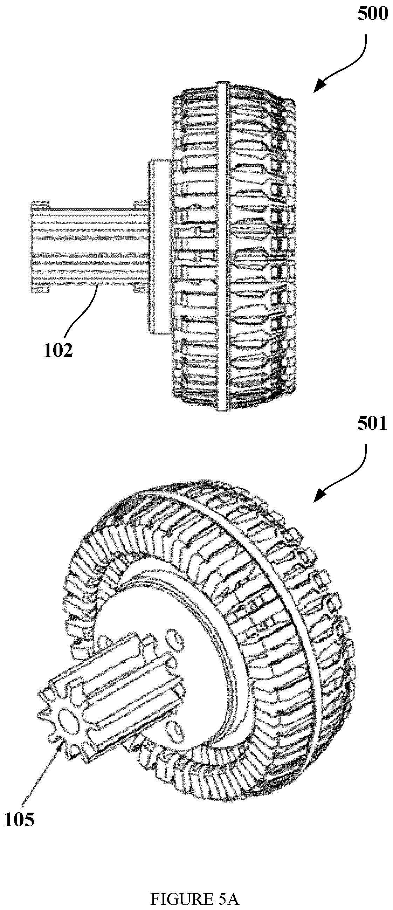

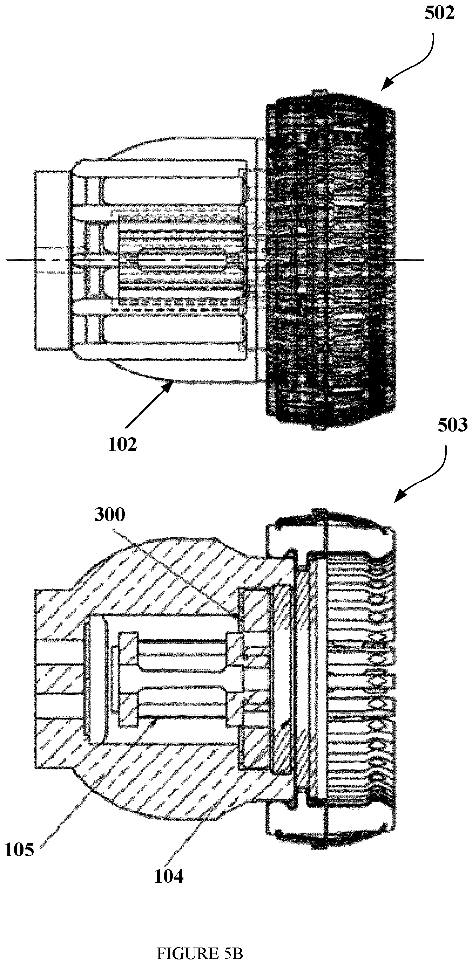

In another embodiment, the tubular base portion 102 in the circuit breaker 100 may comprise the plurality of slits or may be a ventilated tubular base portion. **Figure 5A** illustrates the circuit breaker 500 with the tubular base portion 102. The heat sink 105 is integrated with the tubular base portion 102 as shown in 501. **Figure 5B** illustrates a sectional side view 502 of the circuit breaker 500 with the tubular base portion 102. The tubular base portion 102 with the plurality of slits or the ventilated tubular base portion is shown in 502. Further, Figure 5B illustrates a sectional perspective view 503 of the heat sink 105 integrated within the tubular base portion 102 with the plurality of slits.

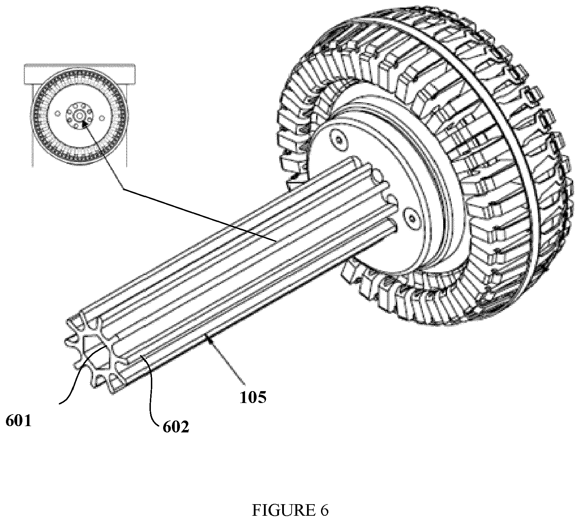

In an embodiment, the heat sink 105 may comprise a plurality of vertical bars 602 formed on a base plate 601 as illustrated in **Figure 6****.** In an embodiment, the plurality of vertical bars 602 may be aligned with the plurality of slits in the circuit breaker 100. This may ensure efficient air flow through the circuit breaker 100, thereby improving heat dissipation in the circuit breaker 100. Figure 6 shows a profile of the heat sink 105. In an embodiment, the heat sink 105 may be made of a material that is a good conductor of a heat, for example, aluminium. A person skilled in the art will appreciate that the heat sink 105 may be made of any materials other than the above-mentioned material.

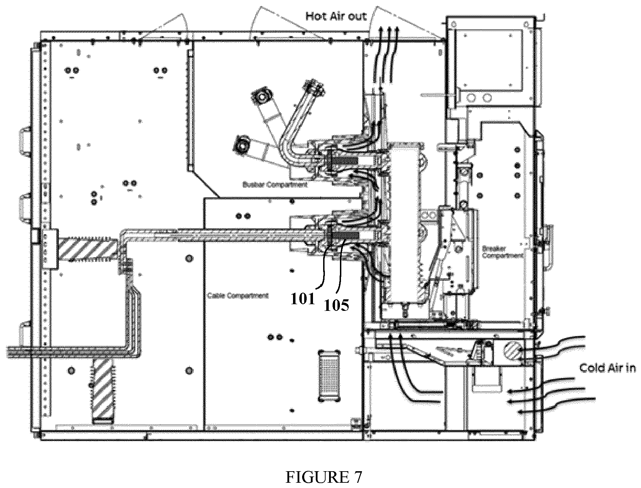

**Figure 7** illustrates an exemplary switchgear, in accordance with embodiments of the present disclosure. The switchgear may include a cable compartment, a breaker compartment, a busbar compartment, and the like. The breaker compartment comprises the circuit breaker 100. The circuit breaker 100 may comprise the tulip contact 101 integrated with the heat sink 105. The heat sink 105 ensures efficient heat dissipation in the circuit breaker 100. For instance, consider cold air passes through a lower compartment in the switchgear towards the circuit breaker 100 as shown using arrows in Figure 7. The cold air acts as a medium for transfer of heat from the circuit breaker 100 to outside environment. The generation of heat in the circuit breaker 100 causes hot air inside the breaker compartment. The heat sink 105 integrated in the tulip contact 101 provides a surface area for dissipation of the hot air using the cold air as the medium. The hot air is dissipated away from the circuit breaker 100 towards upper compartments of the circuit breaker 100, finally dissipating the heat to the environment.

The present disclosure provides the heat sink integration within the tubular base portion of the tulip contact, such that the heat is dissipated at a source of generation of heat. Hence, temperature is lowered, thus leading to efficient thermal management of the circuit breaker. This increases thermal stability of the circuit breaker. The integration of the heat sink 105 within the closed tubular base portion of the circuit breaker improves thermal functionality without affecting di-electric performance. The integration of the heat sink 105 within the ventilated tubular base portion improves heat dissipation due to ventilation and alignment of the heat sink with the ventilated tubular base portion.

The terms "an embodiment", "embodiment", "embodiments", "the embodiment", "the embodiments", "one or more embodiments", "some embodiments", and "one embodiment" mean "one or more (but not all) embodiments of the invention(s)" unless expressly specified otherwise.

The terms "including", "comprising", "having" and variations thereof mean "including but not limited to", unless expressly specified otherwise.

The enumerated listing of items does not imply that any or all of the items are mutually exclusive, unless expressly specified otherwise. The terms "a", "an" and "the" mean "one or more", unless expressly specified otherwise.

A description of an embodiment with several components in communication with each other does not imply that all such components are required. On the contrary a variety of optional components are described to illustrate the wide variety of possible embodiments of the invention.

When a single device or article is described herein, it will be readily apparent that more than one device/article (whether or not they cooperate) may be used in place of a single device/article. Similarly, where more than one device or article is described herein (whether or not they cooperate), it will be readily apparent that a single device/article may be used in place of the more than one device or article or a different number of devices/articles may be used instead of the shown number of devices or programs. The functionality and/or the features of a device may be alternatively embodied by one or more other devices which are not explicitly described as having such functionality/features. Thus, other embodiments of the invention need not include the device itself.

Finally, the language used in the specification has been principally selected for readability and instructional purposes, and it may not have been selected to delineate or circumscribe the inventive subject matter. It is therefore intended that the scope of the invention be limited not by this detailed description, but rather by any claims that issue on an application based here on. Accordingly, the disclosure of the embodiments of the invention is intended to be illustrative, but not limiting, of the scope of the invention, which is set forth in the following claims.

While various aspects and embodiments have been disclosed herein, other aspects and embodiments will be apparent to those skilled in the art. The various aspects and embodiments disclosed herein are for purposes of illustration and are not intended to be limiting, with the true scope being indicated by the following claims.

### Referral Numerals:

| **Referral Number** | **Description** |
|---|---|
| 100 | Circuit breaker |
| 101 | Tulip contact |
| 102 | Tubular base portion |
| 103 | Plurality of contact fingers |
| 104 | Ring nut |
| 105 | Heat sink |
| 106 | Moving contact assembly |
| 300 | Base |
| 601 | Base plate |
| 602 | Plurality of vertical bars |

## Claims

1. A circuit breaker (100) for thermal management in an electrical equipment, the circuit breaker (100) comprises:
a tulip contact (101) positioned on a moving contact assembly (106), comprising:
a tubular base portion (102);
a plurality of contact fingers (103) circumferentially disposed on an outer surface of a ring nut (104) of the tulip contact (101); and
a heat sink (105), integrated within the tubular base portion (102), for thermal management in an electrical equipment, wherein the heat sink (105) is integrated to the ring nut (104) of the tulip contact (101).

2. The circuit breaker (100) as claimed in claim 1, wherein the integration comprises coupling the heat sink (105) to the ring nut (104) of the tulip contact (101).

3. The circuit breaker (100) as claimed in claim 2, wherein the coupling comprises thermal coupling of the heat sink (105) to the ring nut (104).

4. The circuit breaker (100) as claimed in claim 1, wherein the integration comprises removably coupling the heat sink (105) to the ring nut (104) of the tulip contact (101).

5. The circuit breaker (100) as claimed in claim 4, wherein the removably coupling comprises mechanical coupling of the heat sink (105) to the ring nut (104).

6. The circuit breaker (100) as claimed in claim 1, wherein the tubular base portion (102) is one of, a closed tubular base portion or a tubular base portion with a plurality of slits.

7. The circuit breaker (100) as claimed in claim 1, wherein the heat sink (105) comprises a plurality of vertical bars (602) formed on a base plate (601).

8. A tulip contact (101) for thermal management in an electrical equipment, the tulip contact (101) comprises:
a tubular base portion (102);
a plurality of contact fingers (103) circumferentially disposed on an outer surface of a ring nut (104) of the tulip contact (101); and
a heat sink (105), integrated within the tubular base portion (102), for thermal management in an electrical equipment, wherein the heat sink (105) is integrated to the ring nut (104) of the tulip contact (101).

9. The tulip contact (101) as claimed in claim 8, wherein the integration comprises coupling the heat sink (105) to the ring nut (104) of the tulip contact (101).

10. The tulip contact (101) as claimed in claim 8, wherein the integration comprises removably coupling the heat sink (105) to the ring nut (104) of the tulip contact (101).
